Europäisches Patentamt

European Patent Office

Office européen des brevets

(11) Veröffentlichungsnummer: **0 334 010 B1**

(12) **EUROPÄISCHE PATENTSCHRIFT**

(45) Veröffentlichungstag der Patentschrift:
27.11.91 Patentblatt 91/48

(51) Int. Cl.$^5$: **F16L 59/12**

(21) Anmeldenummer: **89102271.7**

(22) Anmeldetag: **10.02.89**

(54) **Thermisch isolierte Rohrleitung.**

(30) Priorität: **19.03.88 DE 3809311**
**14.07.88 DE 3823876**

(43) Veröffentlichungstag der Anmeldung:
**27.09.89 Patentblatt 89/39**

(45) Bekanntmachung des Hinweises auf die
Patenterteilung:
**27.11.91 Patentblatt 91/48**

(84) Benannte Vertragsstaaten:
**AT BE CH DE ES FR GB GR IT LI LU NL SE**

(56) Entgegenhaltungen:
**EP-A- 0 000 497**
**EP-A- 0 096 791**
**EP-A- 0 114 269**

(73) Patentinhaber: **MAN Gutehoffnungshütte
Aktiengesellschaft
Bahnhofstrasse 66 Postfach 11 02 40
W-4200 Oberhausen 11 (DE)**

(72) Erfinder: **Rank, Werner, Dipl.-Ing.
Wilhelmstrasse 97a
W-4200 Oberhausen 11 (DE)**
Erfinder: **Lausberg, Helmut, Dr. Ing.
Wilhelmplatz 3
W-4200 Oberhausen 11 (DE)**

## Beschreibung

Die Erfindung betrifft eine thermisch isolierte, aus einzelnen Schüssen aufgebaute Rohrleitungen für unter Druck stehende Heißgase, bestehend aus einem drucktragenden metallischen Mantelrohr, einem hochtemperaturbeständigen, zentrisch geführten Kernrohr und zwischen beiden Rohren angeordnetem faserförmigen Isolierstoff, wobei die aus hitzebeständiger, poröser Keramik oder keramikähnlichem Werkstoff hergestellten Kernrohrschüsse an ihrer Verbindungsstelle mit Vorsprung und Rücksprung versehen sind.

Es ist bekannt, Heißgasrohrleitungen innen mit einer wärmedämmenden Auskleidung zu versehen, um damit hohe Temperaturen von der drucktragenden Rohrwand fernzuhalten. Auf diese Weise läßt sich die Werkstoffauswahl und die Rohrwanddimensionierung unter wirtschaftlichen Gesichtspunkten treffen.

Für die Innenisolation von Heißgasleitungen werden in erster Linie verwendet :
— Ausmauerung mit ff. und wärmedämmenden Steinen,
— Auskleidung mit ff. und wärmedämmenden Stampf-, Spritz- und Gießmassen,
— Auskleidung mit isolierendem Fasermaterial,
— Verwendung eines druckentlasteten metallischen Kernrohres für die Gasführung und Auskleidung des Raumes zwischen Kern- und Mantelrohren mit wärmedämmendem Fasermaterial,
— Verwendung eines druckentlasteten metallischen Kernrohres und Auskleidung mit wärmedämmenden Gießmassen.

Die ersten drei Isolationsmethoden wendet man vorzugsweise bei begehbaren Rohrleitungen an, während man bei Rohrleitungen geringerer Nennweite die beiden zuletzt aufgeführten Isolationsarten verwendet.

Bei der Innenisolation mittels Ausmauerung mit ff. Steinen und Auskleidung mit Stampfmassen u. dgl. sowie bei Verwendung eines Kernrohres mit Zwischenraumauskleidung mit Gießmassen besteht die Gefahr der Rißbildung infolge Materialschwund beim Austrocknen des ff.-Materials. Risse können bei diesen Arten der Isolierung außerdem auftreten, wenn die Möglichkeit besteht, daß die Rohrleitung Erschütterungen ausgesetzt wird bzw. aufgezwungene Dehnbewegungen macht.

Rißbildungen in der Wärmeisolation von Rohrleitungen verursachen Wärmebrücken in Richtung auf die drucktragende Rohrwand. Andererseits besteht die Gefahr, daß Isolationsmaterial ausbricht, von dem Gasstrom in das anschließende System getragen wird und dort Schäden verursacht.

Eine Innenisolation mit metallischem Kernrohr und Fasermaterial-Wärmedämmung wurde im Rahmen von Planungsarbeiten zur Bereitstellung nuklear erzeugter Prozeßwärme zur Kohlevergasung entwickelt und erprobt, insbesondere für trockene Gase. Wegen der im Metallkernrohr auftretenden hohen Temperaturen muß dieses aus hochwertigem Werkstoff bestehen und es ist notwendig, daß zur Kompensation der unterschiedlichen Wärmeausdehnungen zum Mantelrohr aufwendige Vorkehrungen getroffen werden. Dadurch verteuert sich die Heißgasleitung. Dasselbe trifft auch für Leitungen mit Metallkernrohr und Wärmedämmung mittels Gießmassen zu, wobei hier zusätzlich das Problem von Pressungen aus der unterschiedlichen Radialdehnung hinzukommt.

Thermisch isolierte Rohrleitungen mit metallischen Kernrohr weisen einen weiteren Nachteil auf, der durch die Gas- und Feuchteundurchlässigkeit des Kernrohres hervorgerufen wird. Bei Abkühlung der Rohrleitung können in der Isolationsschicht auskondensierte Bestandteile des Produktgases nicht durch die Kernrohrwand in den Gasraum zurückdringen und dann austrocknen.

Aus der EP-A-0096791 ist eine thermisch isolierte, aus einzelnen Schüssen aufgebaute Rohrleitung für unter Druck stehende Heizgase bekannt, die aus einem drucktragenden, am Stoß zusammengeschweißten metallischen Mantelrohr, einem hochtemperaturbeständigen, zentrisch geführten Kernrohr und zwischen beiden Rohren angeordnetem faserförmigen Isolierstoff besteht. Die Verbindungsstelle der aus hitzebeständiger poröser Keramik hergestellten Kernrohrschüsse ist mit aus Isolierfaser gewebten Ringen bestückt, wobei die Stoßstellen des Kernrohres durch wechselseitige Überlappungen so ausgebildet werden, daß die einzelnen Schüsse auch bei durch Temperaturwechsel bedingte Längenänderungen aufeinander zentriert bleiben und daß der zwischen ihnen auftretende Spalt größtenteils abgedichtet wird.

Aus der EP-A-0114269 ist ferner eine aus einem druckeinschließenden Außenrohr und einem strömungsführenden, nicht druckdichten Innenrohr mit dazwischen angeordneter Isolierung aufgebaute Rohrleitung bekannt.

Zur Strömungsführung von Heißgasen dient ein konzentrisch zum Außenrohr angeordnetes Innenrohr, das aus einzelnen ineinandergesteckten Schüssen oder Modulen aufgebaut ist und das aus einem hochwarmfesten, metallischen Werkstoff, z.B. einer Nickelbasis-Legierung, hergestellt ist.

Das einzelne Modul besteht aus einem längeren zylindrischen Teil, den kammförmigen Ausnehmungen bzw. den dazwischen stehengebliebenen Zähnen an dem einen Ende und einem U-förmigen, biegsamen Flansch mit einem kurzen zylindrischen Teil an dem anderen Ende. Das Entstehen von Konvektionsströmungen über die gesamte Länge der Rohrleitung wird hier durch keramische Trennscheiben unterbrochen, die zwischen den einzelnen Modulen bzw. zwischen den Isolierschichten und dem Flansch eingelegt werden.

Aufgabe der Erfindung ist es, eine thermisch isolierte Rohrleitung insbesondere für kleinere Nennweiten zu schaffen, die die zuvor beschriebenen Nachteile weitgehend vermeidet.

Nach der Erfindung wird die Aufgabe in der Weise gelöst, wie es in den Patentansprüchen angegeben ist.

Das für die erfindungsgemäße Rohrleitung vorgesehene Kernrohr kann aus mechanisch bearbeitbarer poröser Keramik, z.B. $Al_2O_3$ -Sinterkeramik oder einem keramikähnlichen Material bestehen. Die zu verwendenden Zentrierringe sind in der Regel aus dem gleichen Werkstoff wie das Kernrohr herzustellen.

Wenn eine Rohrleitung, hergestellt aus hitzebeständiger poröser Keramik oder keramikähnlichem Werkstoff, von einem mit Feststoffpartikeln beladenen Gas durchströmt wird, kann je nach Härte und Form der Feststoffpartikel im Gas und je nach Härte des für das Kernrohr verwendeten Materials die Gefahr auftreten, daß das Kernrohr, von der inneren Oberfläche ausgehend, mechanisch zerstört wird. Eine Zerstörung der Rohroberfläche kann auch durch chemischen Angriff erfolgen.

Gemäß einer Weiterbildung des erfindungsgegenstandes kann daher die innere Oberfläche des Kernrohres mit einer den jeweiligen Betriebsbedingungen angepaßten verschleißmindemden Beschichtung versehen werden. Als Beschichtungsmaterial können je nach den Betriebsbedingungen (Art des für das Kernrohr verwendeten Werkstoffes, Temperatur des das Kernrohr durchströmenden Gases, Eigenschaften der im Gas enthaltenen Feststoffpartikel) Lacke, Kunststoffe, Metalle, Metallkeramik od. dgl. verwendet werden. Das Auftragen der Beschichtung kann in bekannter Weise, beispielsweise durch Spritzen, Tauchen, Plasma- oder Flammspritzen, erfolgen.

Der keramische Zentrierring überbrückt den Verbindungsstoß zwischen zwei Kernrohrlängen, dient der Zentrierung und Halterung des Kernrohres und verhindert eine Bypaßströmung des Produktgases zwischen Kernrohr, Isoliermaterial und metallischem Mantelrohr.

Durch geeignete Wahl der Außenwandtemperatur und Dicke der Wärmedämmschicht läßt sich eine gleichmäßige Dehnung des gesamten Rohrkörpers erreichen. Die durch Vor- und Rücksprung gebildete Verbindung von zwei Kernrohrschüssen läßt aber auch eine axiale Dehnung des Kernrohres gegenüber dem Mantelrohr zu.

Anzahl und Durchmesser der axial und radial im Zentrierring verlaufenden Bohrungen zum Druckausgleich um das Kernrohr richten sich nach der Höhe der Druckdifferenz, die durch eine Betriebsstörung plötzlich um das Kernrohr auftreten kann.

Die Rippen auf den Stirnflächen des Zentrierringes haben den Zweck, daß sie sich beim Zusammenbau der Isolation in den faserförmigen Isolierstoff eindrücken, so daß Kanalbildungen hier vermieden werden.

Die mittig am Umfang des Zentrierringes eingearbeitete Nut, die sich bei der zusammengebauten Rohrleitung gegenüber der Stoßstelle von zwei Schüssen des Mantelrohres befindet, bietet die Möglichkeit, eine perfekte Schweißverbindung der Rohrschüsse auch bei bereits eingebrachter Isolation herzustellen.

Um sicherzustellen, daß die das Kernrohr umgebende Faserisolation den Ringraum zwischen Kernrohr und Mantelrohr gleichmäßig und voll ausfüllt, soll die Herstellung und Einbringung der Innenisolierung folgendermaßen ausgeführt werden :

Das Kernrohr wird mit Isolierstoff in Form von Bändern, Matten, Rundschnur, Streifen etc. umwickelt. Dabei ist die Dicke der Lage(n) so zu wählen, daß der Isolierstoff nach Einschub der Innenisolierung in das Mantelrohr so verdichtet ist, daß er seine Isolationseigenschaften erfüllt und spaltfrei an der Innenwand des Mantelrohres anliegt. Bevor das umwickelte Kernrohr in das Mantelrohr eingebracht wird, umwickelt man die Isolierstofflagen mit einer thermisch zerstörbaren Binde aus Mull, Kunststoff oder ähnlichem Material.

Durch die Erhitzung der Mantelrohrschüsse nach Einbringen der mit Isolierstoff umwickelten Kernrohrschüsse wird die Wickelbinde zerstört und der komprimierte Isolierstoff kann den Ringraum zwischen Kern- und Mantelrohr vollständig ausfüllen.

Die erfindungsgemäße thermisch isolierte Rohrleitung weist nachstehende Vorteile auf :

— die Wärmeleitfähigkeit von Kernrohr, Zentrierring und faserförmigem Isolierstoff sind nahezu gleich, so daß das Kernrohr bereits einen Teil der Wärmedämmung übernimmt,

— die Wärmedehnung des Kernrohres ist so gering, daß kaum eine Differenzdehnung zwischen Mantel- und Kernrohr auftritt und so die vorerwähnte Überlappung an den Kernrohrenden zur Kompensation ausreicht,

— infolge der Porosität des Kernrohres kann ein Stoffaustausch um die gesamte Kernrohraußenfläche stattfinden,

— Kernrohr, Zentrierring und faserförmiger Isolierstoff haben geringes Gewicht,

— aus dem Kernrohrwerkstoff lassen sich Formteile herstellen, die geklebt werden können, so daß dadurch spezielle Rohrleitungsformteile, wie z.B. Krümmer, T- oder Y-Stücke, mit der vorbeschriebenen Innenisolation ausgerüstet werden können.

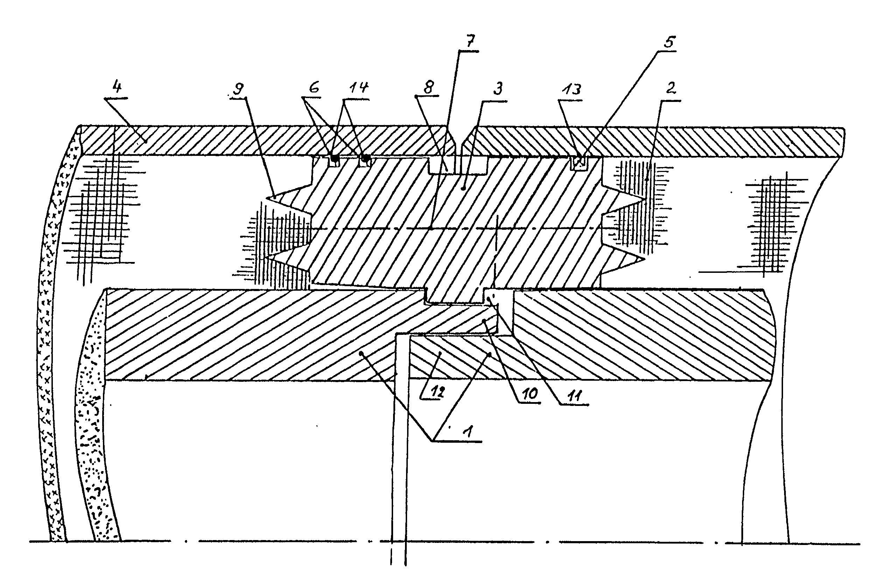

Ein Ausführungsbeispiel der Erfindung wird anhand der Zeichnung, die einen halben Längsaxialschnitt durch eine Heißgasrohrleitung zeigt, erläutert.

Die für den Transport heißer, unter Druck stehender Gase vorgesehene Rohrleitung besteht aus einem inneren Gasführungsrohr, dem Kernrohr (1), das aus einzelnen, mit Vorsprung (10) und Rücksprung (12) ineinandergesteckten Rohrschüssen aufgebaut ist, von denen zwei Schüsse teilweise dargestellt sind. Das Kernrohr (1) ist aus hitzebeständiger Keramik bzw. keramikähnlichem Material hergestellt. Gegebenenfalls wird die innere Oberfläche des Kernrohres mit einer verschleißmindernden Beschichtung versehen.

Ein äußeres, drucktragendes metallisches Mantelrohr ist mit (4) bezeichnet. Die einzelnen Schüsse des Mantelrohres (4) werden in bekannter Weise druckdicht zusammengeschweißt. Der Zwischenraum zwischen Kernrohr (1) und Mantelrohr (4) ist mit faserförmigem Isolierstoff (2) beispielsweise Mineralwolle, ausgefüllt.

Kernrohr (1) und Mantelrohr (4) stützen sich über Zentrierringe (3), die aus dem gleichen oder ähnlichem Werkstoff wie das Kernrohr hergestellt sind, aufeinander ab. Die Zentrierringe (3) sind in dem Ringraum zwischen dem Mantelrohr (4) angeordnet. An der zum Rohrinneren gerichteten Seite des Zentrierringes (3) weist dieser einen umlaufenden Vorsprung auf, der in eine Ausdrehung (11) im zum Mantelrohr (4) gerichteten Vorsprung (10) des Kernrohrschusses (1) eingreift.

Damit die Kernrohrschüsse (1) im Mantelrohr (4) in ihrer horizontalen und vertikalen Lage mit Hilfe des Zentrierringes (3) fixiert sind, werden in die Nuten (5, 6) am äußeren Umfang des Zentrierringes (3) Sprengringe (13) bzw. Federspiralen (14) aus Metall eingelegt. Aufgrund ihrer Federwirkung pressen sich die Sprengringe bzw. Federspiralen an die Innenwand des Mantelrohres (4).

Axiale und radiale Bohrungen (7) im Zentrierring (3) dienen dem Druckausgleich.

Die an den Stirnflächen des Zentrierringes (3) angedeuteten spitzen Rippen (9) sollen sich beim Zusammenbau der Rohrleitung in den Isolierstoff (2) eindrücken.

Die umlaufende Nut (8) am Umfang des Zentrierringes (3) befindet sich gegenüber dem Stoß von zwei Mantelrohrschüssen (4). An diesen Stoßstellen werden die Mantelrohrschüsse zusammengeschweißt, und das Vorhandensein der Umfangsnut (8) stellt sicher, daß infolge des durch die Nut gebildeten Hohlraumes unterhalb des Schweißbereiches eine vollkommene Verschweißung stattfinden kann und daß beim Schweißvorgang eine Verunreinigung des Schweißgutes durch Fremdstoffe vermieden wird.

## Patentansprüche

1. Thermisch isolierte, aus einzelnen Schüssen aufgebaute Rohrleitungen für unter Druck stehende Heißgase, bestehend aus einem drucktragenden metallischen Mantelrohr (4), einem hochtemperaturbeständigen, zentrisch geführten Kernrohr (1) und zwischen beiden Rohren angeordnetem faserförmigen Isolierstoff (2), wobei die aus hitzebeständiger, poröser Keramik oder keramikähnlichem Werkstoff hergestellten Kernrohrschüsse (1) an ihrer Verbindungsstelle mit Vorsprung (10) und Rücksprung (12) versehen sind, dadurch gekennzeichnet, daß die Verbindungsstelle der Kernrohrschüsse (1) mit einem Zentrierring (3), der aus dem gleichen Werkstoff wie das Kernrohr (1) hergestellt ist, überdeckt wird, daß der Zentrierring (3) auf eine Ausdrehung (11) des Vorsprungs (10) aufgesteckt ist, und daß der Zentrierring (3) an beiden Enden über den Umfang verlaufende Nuten (5, 6) aufweist, in die Sprengringe (13) oder Federspiralen (14) eingebracht sind.

2. Rohrleitung nach Anspruch 1, dadurch gekennzeichnet, daß die innere Oberfläche des Kernrohres mit einer den jeweiligen Betriebsbedingungen angepaßten verschleißmindernden Beschichtung versehen ist.

3. Rohrleitung nach Anspruch 1, dadurch gekennzeichnet, daß in dem Zentrierring (3) axial und radial verlaufende Bohrungen (7) eingebracht sind.

4. Rohrleitung nach Anspruch 1, dadurch gekennzeichnet, daß die beiden Stirnflächen des Zentrierringes (3) mit rippenartigen Vorsprüngen (9) versehen sind.

5. Rohrleitung nach Anspruch 1, dadurch gekennzeichnet, daß der Zentrierring (3) mittig am Umfang gegenüber der Stoßstelle der Mantelrohrschüsse (4) mit einer weiteren Nut (8) versehen sind.

6. Verfahren zum Aufbau einer Heißgasrohrleitung nach den Ansprüchen 1 bis 5, dadurch gekennzeichnet, daß die mit Zentrierringen (3) versehenen und mit Isolierstoff (2) umwickelten Kernrohrschüsse (1) vor dem Einführen in das Mantelrohr (4) mit einer den Isolierstoff (2) komprimierenden Binde aus thermisch zerstörbarem Material umwickelt werden.

## Revendications

1. Conduites thermiquement isolées constituées de tronçons individuels pour faire passer des gaz très chauds sous pression, constituées d'un tube enveloppe (4) métallique supportant la pression, d'un tube central (1) guidé et résistant aux températures élevées et de substance isolante (2) en fibres placée entre les deux tube, les tronçons (1) de tube central réalisés en céramique réfractaire poreuse ou en matériau analogue à la céramique étant munis à leur connexion d'épaulement (10) et d'emboîtement (12) caractérisés en ce qu'on recouvre les connexions des tronçons (1) du tube central avec une bague de centrage (3), réalisée dans le même matériau que le tube central (1), que la bague de centrage (3) est enfichée sur un alésage (11) de l'épaulement (10) et que la bague de centrage (3) présente à ses deux extrémités des gorges s'étendant sur la périphérie (5, 6), dans lesquelles on place des bagues élastiques (13) ou des ressorts spirale (14).

2. Conduite selon la revendication 1, caractérisée en ce qu'on munit la surface interne du tube central d'un revêtement diminuant l'abrasion, adapté aux conditions de service.

3. Conduite selon la revendication 1, caractérisée en ce qu'on implante dans la bague centrale (3) des perçages (7) d'extension radiale et axiale.

4. Conduite selon la revendication 1, caractérisée en ce qu'on équipe les deux faces frontales de la bague de centrage (3) de saillies (9) en forme de nervure.

5. Conduite selon la revendication 1, caractérisée en ce qu'on équipe la bague de centrage (3) au milieu et sur la périphérie opposée au bord des tronçons de tube enveloppe (4) d'une autre gorge (8).

6. Procédé d'assemblage d'une conduite de gaz très chauds selon les revendications 1 à 5, caractérisé en ce qu'on enveloppe d'une bande en matériau pouvant être détruite thermiquement, qui comprime la substance isolante (2), les tronçons (1) de tube central munis de bagues de centrage (3) et enveloppés de substance isolante (2), avant l'insertion dans le tube enveloppe (4).

## Claims

1. Thermally insulated pipes for hot pressurized gases, which are constructed from individual lengths of pipe, comprising a pressure-bearing metallic tubular shell (4), a centrally guided inner tube (1), which is resistant to high temperatures, and fibrous insulating material (2) which is disposed between the two pipes, wherein the inner tube lengths (1), which are produced from high-temperature resistant porous ceramic or ceramic-like material are provided at their connecting point with a projection (10) and recess (12), characterised in that the connecting point of the inner tube lengths (1) is covered by a centring ring (3), which is produced from the same material as the inner tube (1) ; in that the centring ring (3) is mounted on a recess (11) of the projection (10) ; and in that the centring ring (3) comprises at both ends grooves (5, 6) which extend over the periphery and into which snap rings (13) or spring spirals (14) are inserted.

2. Pipe according to claim 1, characterised in that the inner surface of the inner tube is provided with an anti-wear coating which is adapted to the respective working conditions.

3. Pipe according to claim 1, characterised in that axially and radially extending bores (7) are provided in the centring ring (3).

4. Pipe according to claim 1, characterised in that the two end faces of the centring ring (3) are provided with rib-like projections (9).

5. Pipe according to claim 1, characterised in that the centring ring (3) is provided with a further groove (8) centrally on the periphery opposite the junction point of the pipe lengths of the tubular shell (4).

6. Method for constructing a hot gas pipe according to claims 1 to 5, characterised in that the inner tube lengths (1), which are provided with centring rings (3) and are covered with insulating material (2), are covered before being inserted into the tubular shell (4) with a binding of thermally destructible material which compresses the insulating material (2).